# EUROPÄISCHE PATENTSCHRIFT

(11) **EP 4 250 057 B1**
(45) Veröffentlichungstag und Bekanntmachung des Hinweises auf die Patenterteilung: **13.08.2025**
(21) Anmeldenummer: 23162330.7
(22) Anmeldetag: 16.03.2023
(51) Int. Cl.: G06F 1/18, G06F 1/28, H01R 31/06, H01R 13/66

(54) **ELEKTRISCHE STECKVERBINDUNGSEINRICHTUNG, STECKVERBINDUNGSSYSTEM, COMPUTER MIT EINEM NETZTEIL UND EINER GRAFIKKARTE SOWIE VERWENDUNG DER STECKVERBINDUNGSEINRICHTUNG**
ELECTRICAL PLUG-IN CONNECTION DEVICE, PLUG-IN CONNECTION SYSTEM, COMPUTER HAVING A POWER SUPPLY AND A GRAPHIC CARD, AND USE OF THE PLUG-IN CONNECTION DEVICE
DISPOSITIF DE CONNEXION ÉLECTRIQUE ENFICHABLE, SYSTÈME DE CONNEXION ENFICHABLE, ORDINATEUR DOTÉ D'UNE ALIMENTATION ÉLECTRIQUE ET D'UNE CARTE GRAPHIQUE ET UTILISATION DU DISPOSITIF DE CONNEXION ENFICHABLE

(30) Priorität: 25.03.2022 DE 102022107075
(43) Veröffentlichungstag der Anmeldung: 27.09.2023
(73) Patentinhaber: Thermal Grizzly Holding GmbH, 16540 Hohen Neuendorf (DE)
(72) Erfinder: HARTUNG, Roman, 13581 Berlin (DE); VON OPPENKOWSKI, Johannes, 13581 Berlin (DE)
(74) Vertreter: Seemann & Partner Patentanwälte mbB

(56) Entgegenhaltungen:
- WO-A1-2021/121743
- DE-U1- 202010 000 364
- DE-U1- 8 709 193
- US-A- 5 737 189
- US-A1- 2012 243 160

## Beschreibung

Die Erfindung betrifft eine elektrische Steckverbindungseinrichtung zum Replizieren zumindest einer Stromanschlussbuchse eines Computerbauteils, umfassend ein Basisbauteil, einen Adapter-Stecker und eine Adapter-Buchse, wobei der Adapter-Stecker bauartgemäß ausgestaltet ist, mit der Stromanschlussbuchse des Computerbauteils eine elektrische Steckverbindung auszubilden, und die Adapter-Buchse bauartgemäß ausgestaltet ist, die Stromanschlussbuchse des Computerbauteils zu replizieren, und wobei der Adapter-Stecker und die Adapter-Buchse mit voneinander abweichenden Steckverbindungsrichtungen an dem Basisbauteil angeordnet sind und der Adapter-Stecker und die Adapter-Buchse über interne Verbindungsleitungen elektrisch kontaktiert sind. Außerdem betrifft die Erfindung ein Steckverbindungssystem sowie einen Computer mit einem Netzteil und einer Grafikkarte, wobei die Grafikkarte eine Stromanschlussbuchse umfasst und das Netzteil einen mit einem Stromversorgungskabel verbundenen Stecker bereitstellt. Ferner betrifft die Erfindung die Verwendung der genannten Steckverbindungseinrichtung.

Die Stromversorgung einer Grafikkarte erfolgt in vielen Computern über die Schnittstelle, mit der die Grafikkarte auch datentechnisch mit der Systemplatine gekoppelt ist. Leistungsstarke Grafikkarten, wie sie beispielsweise in sog. Gaming-PCs zur Anwendung kommen, verfügen über separate Stromanschlussbuchsen, da die zum performanten Betrieb der Grafikkarte erforderliche Leistung nicht über die Schnittstelle selbst eingespeist werden kann. Typische Stromanschlüsse sind beispielsweise ein 6-Pin oder ein 8-Pin PCIe-Stromanschluss.

In vielen Fällen ist die Kabelführung ausgehend von einem Netzteil des Computers zu dem entsprechenden Stromanschluss der Grafickarte relativ aufwendig und umständlich zu montieren. Aus diesem Grund sind gewinkelte Adapter bekannt, welche einen Stromanschluss replizieren. Ein um 90° gewinkelter Anschlussadapter für einen 6-Pin Anschluss ist beispielsweise aus US 2008/0264668 A1 bekannt.

Neben einer einfacheren und gut handhabbaren elektrischen Kontaktierung ist es insbesondere bei Computersystemen mit hoher Leistung interessant und wichtig, einzelne Computerbauteile, beispielsweise eine Grafikkarte, zu überwachen. Dies dient beispielsweise dazu, eine thermische Überlastung des betreffenden Computerbauteils zu vermeiden.

Aus US 5 737 189 A1 ist ein modularer Massenspeicher bekannt, dessen einzelne übereinander gestapelte Module auf ihrer Rückseite durch Steckverbindungskabel elektrisch miteinander verbunden sind.

Diese Steckverbindungskabel weisen an beiden Enden Kaltgerätestecker auf, die in die geräteseitig vorhandenen Steckdosen eingesteckt werden, um die Stromversorgung der einzelnen Module untereinander herzustellen.

Aus US 2012/0243160 A1 ist ein modulares Computersystem bekannt, bei dem mehrere Hauptplatinen über eine sogenannte power backplane mit einer gemeinsamen Stromversorgung verbunden werden. Die einzelnen Platinen dieser power backplane werden über sogenannte power jumper elektrisch kontaktiert.

Aus DE 20 2010 000 364 U1 ist eine kontaktlose Strommessvorrichtung bekannt, die als Steckdosenadapter ausgestaltet ist. Der Verbrauch eines an diesem Steckdosenadapter angeschlossenen Verbrauchers kann auf einem Display angezeigt werden.

Aus DE 87 09 193 U1 ist ein Steckdosenadapter bekannt, in den ein Amperemeter integriert ist. Mit diesem kann ein über eine Haushaltssteckdose abgerufener Strom auf einer Skala angezeigt werden.

Aufgabe der Erfindung ist es, eine elektrische Steckverbindungseinrichtung, einen Computer sowie die Verwendung einer Steckverbindungseinrichtung anzugeben, wobei die elektrische Stromversorgung eines Computerbauteils mit einer separaten Stromanschlussbuchse vereinfacht und außerdem eine einfache und effiziente Überwachung des Computerbauteils möglich sein soll.

Die Aufgabe wird gelöst durch eine elektrische Steckverbindungseinrichtung zum Replizieren zumindest einer Stromanschlussbuchse eines Computerbauteils, umfassend ein Basisbauteil, einen Adapter-Stecker und eine Adapter-Buchse, wobei der Adapter-Stecker bauartgemäß ausgestaltet ist, mit der Stromanschlussbuchse des Computerbauteils eine elektrische Steckverbindung auszubilden, und die Adapter-Buchse bauartgemäß ausgestaltet ist, die Stromanschlussbuchse des Computerbauteils zu replizieren, und wobei der Adapter-Stecker und die Adapter-Buchse mit voneinander abweichenden Steckverbindungsrichtungen an dem Basisbauteil angeordnet sind und der Adapter-Stecker und die Adapter-Buchse über interne Verbindungsleitungen elektrisch kontaktiert sind, und wobei diese elektrische Steckverbindungseinrichtung fortgebildet ist durch eine elektronische Messvorrichtung, wobei die elektronische Messvorrichtung dazu eingerichtet ist, zumindest eine elektrische Kenngröße an den internen Verbindungsleitungen zu messen.

Vorteilhaft erlaubt die elektrische Steckverbindungseinrichtung aufgrund ihrer abgewinkelten Bauart eine leicht zu montierende und zuverlässige elektrische Stromversorgung des Computerbauteils. Ein weiterer Vorteil ist, dass durch die abgewinkelte Bauart der elektrischen Steckverbindungseinrichtung die elektrischen Zuleitungen, mit denen das Computerbauteil mit Strom versorgt wird, den Luftstrom innerhalb eines Computergehäuses, der für die notwendige Kühlung des Computerbauteil aber auch weiterer Bauteile des Computers benötigt wird, nicht mehr so stark beeinflussen. Mithilfe der elektronischen Messvorrichtung ist es ferner möglich, zumindest eine elektrische Kenngröße des über die Steckverbindungseinrichtung übertragenen Stroms oder der an der Steckverbindungseinrichtung anliegenden Spannung zu messen.

Gemäß einer vorteilhaften Ausführungsform ist die Steckverbindungseinrichtung fortgebildet durch eine Anzeige, wobei die elektronische Messvorrichtung dazu eingerichtet ist einen mit dem Wert der Kenngröße korrelierten Parameter auf der Anzeige anzuzeigen.

Ein mit der elektrischen Kenngröße korrelierter Parameter wird vorteilhaft auf der von der Steckverbindungseinrichtung umfassten Anzeige angezeigt und kann so vom Benutzer einfach und permanent überwacht werden. Diese Funktion ist insbesondere für Computer mit sehr hoher Leistung, beispielsweise sog. Gaming-PCs, interessant. Handelt es sich bei dem Computerbauteil beispielhaft um eine Grafikkarte, so kann mithilfe der Steckverbindungseinrichtung beispielsweise die Leistungsaufnahme der Grafikkarte gemessen und anhand des auf der Anzeige angezeigten Parameters überwacht werden.

Die Steckverbindungseinrichtung ist vorteilhaft dadurch fortgebildet, dass der Adapter-Stecker und die Adapter-Buchse um 90° oder um 180° gewinkelt an dem Basisbauteil angeordnet sind.

Indem die Steckverbindungseinrichtung um 90° oder 180° abgewinkelt wird, lassen sich die elektrischen Verbindungsleitungen zu dem Computerbauteil, insbesondere zu einer Grafikkarte, innerhalb des Computergehäuses besser und einfacher verlegen. Es wird der technische Nachteil vermieden, dass die Stromversorgungskabel in einem Bogen zu dem Computerbauteil verlegt werden müssen. Je nachdem wie das Computerbauteil, beispielsweise eine Grafikkarte, auf einer Hauptplatine des Systems angeordnet ist und je nachdem wie die Anschlussbuchse an diesem Computerbauteil montiert ist, kann es bei herkömmlichen Systemen erforderlich sein, die Zuleitungskabel in einem relativ großen Bogen im Gehäuse zu verlegen. Da es sich bei den Zuleitungskabeln vielfach um Kabel mit relativ großem Querschnitt handelt, welche entsprechend mechanisch steif sind, nimmt ein solcher Leitungsbogen viel Bauraum innerhalb des Gehäuses in Anspruch und ist außerdem umständlich in der Montage.

Gemäß einer vorteilhaften Ausführungsform ist vorgesehen, dass der Adapter-Stecker und die Adapter-Buchse um 180° gewinkelt auf einer gemeinsamen Seite des als Flachteil ausgestalteten Basisbauteils angeordnet sind, sodass eine erste Steckverbindungsrichtung, in der der Adapter-Stecker in die Stromanschlussbuchse des Computerbauteils einsteckbar ist, und eine zweite Steckverbindungsrichtung, in der ein weiterer Stecker in die Adapter-Buchse einsteckbar ist, einander entgegengesetzte Richtungen sind.

Mithilfe einer solchen Steckverbindungseinrichtung wird die Stromanschlussbuchse um 180° gekippt bzw. gedreht als Adapter-Buchse repliziert. So kann darauf verzichtet werden, die Stromanschlusskabel in einem Bogen, welcher annähernd 180° beschreibt, zu führen. Im Ergebnis wird eine einfachere und platzsparendere Kabelführung möglich.

Gemäß einer weiteren Ausführungsform ist vorgesehen, dass der Adapter-Stecker zumindest einen 6-Pin, 8-Pin, 12-Pin und/oder 24-Pin Stecker passend für eine entsprechende PCle-Stromanschlussbuchse umfasst und die Adapter-Buchse zumindest eine 6-Pin, 8-Pin, 12-Pin und/oder 24-Pin PCle-Stromanschlussbuchse umfasst.

Bei den PCle-Stromanschlussbuchsen handelt es sich um ein weit verbreitetes System. Vorteilhaft ist die Steckverbindungseinrichtung somit in einer Vielzahl von Computersystemen einsetzbar. Gemäß weiterer Ausführungsformen umfasst die Steckverbindungseinrichtung jeweils eine oder mehrere 6-Pin, 8-Pin, 12-Pin bzw. 24-Pin PCle-Stromanschlussbuchse(n). Sie ist also dazu eingerichtet eine oder mehrere 6-Pin, 8-Pin, 12-Pin oder 24-Pin Stromanschlussbuchse(n) zu replizieren. Es sind beliebige Kombination der vorgeschriebenen Stromanschlussboxen vorgesehen. Auch zukünftige und derzeit noch nicht standardisierte Stromanschlussbuchsen, die eine noch größere Anzahl von Pins umfassen, beispielsweise 36-Pins oder 48 Pins, sind vorgesehen. Durch die mehrfache Verwendung der Stromanschlussbuchsen kann die auf das Computerbauteil übertragenen Leistung erhöht werden. Die Steckverbindungseinrichtung ist vorteilhaft auch für solche Computersysteme bzw. für solche Computerbauteile geeignet.

Gemäß einer weiteren vorteilhaften Ausführungsform ist vorgesehen, dass die elektronische Messvorrichtung dazu eingerichtet ist, als elektrische Kenngröße eine Stromstärke eines zwischen dem Adapter-Stecker und der Adapter-Buchse fließenden Stroms und/oder eine Spannung einer zwischen dem Adapter-Stecker und der Adapter-Buchse anliegenden elektrischen Spannung zu messen.

Die Messung von Strom oder Spannung ist für die Leistung beispielsweise einer Grafikkarte als Computerbauteil für den Anwender besonders interessant. Auch die elektrische Leistung ist ein interessanter Parameter. Der Benutzer wird so in die Lage versetzt, ein Optimum an Leistung aus dem Computerbauteil abzurufen und gleichzeitig eine mögliche Beschädigung des Computerbauteils, beispielsweise aufgrund thermischer Überlastung, wirkungsvoll zu vermeiden. Diese Funktionalität ist besonders für Computersysteme mit hoher Leistung, beispielsweise hoher Grafikleistung, sehr vorteilhaft und für den Anwender interessant. Ferner ist es vorteilhaft, dass für die Messung der genannten elektrischen Größen keine zusätzlichen Bauteile erforderlich sind und die Messvorrichtung im Wege der Integration der Steckverbindungseinrichtung platzsparend direkt in das System integriert werden kann.

Gemäß einer weiteren vorteilhaften Ausführungsform ist die Steckverbindungseinrichtung dadurch fortgebildet, dass die elektronische Messvorrichtung ferner dazu eingerichtet ist als Parameter einen Wert des gemessenen Stroms und/oder einen Wert der gemessenen Spannung anzuzeigen und/oder einen Wert der zwischen dem Adapter-Stecker und der Adapter-Buchse übertragenen elektrischen Leistung als Parameter anzuzeigen. Dies setzt voraus, dass die Steckverbindungseinrichtung mit einer entsprechenden Anzeige versehen ist.

Gemäß einer weiteren Ausführungsform ist die Steckverbindungseinrichtung fortgebildet durch einen Schalter, welcher an dem Basisbauteil angeordnet ist und mit welchem die elektronische Messvorrichtung derart ansteuerbar ist, dass diese auf der Anzeige wahlweise einen oder mehrere der Parameter anzeigt.

Durch Umschalten der Anzeige ist es möglich, den aktuell für den Benutzer interessantesten Parameter auf der Anzeige anzuzeigen. Die Steckverbindungseinrichtung ist somit sehr flexibel.

Gemäß einer weiteren Ausführungsform ist die Steckverbindungseinrichtung fortgebildet durch eine drahtgebundene oder drahtlose Schnittstelle, wobei die elektronische Messvorrichtung dazu eingerichtet ist, den zumindest einen Parameter an der Schnittstelle bereitzustellen.

Über die Schnittstelle ist es beispielsweise möglich, den zumindest einen Parameter mithilfe einer weiteren Vorrichtung, beispielsweise einem Laptop oder einem Tablet, aufzuzeichnen oder auf andere Weise weiter zu verarbeiten. Beispielsweise kann die von dem Computerbauteil abgefragte elektrische Leistung über der Zeit protokolliert und anschließend ausgewertet werden. Auch eine zeitabhängige grafische Darstellung des Parameters, beispielsweise als Verlauf über der Zeit, ist der weiteren Einheit möglich.

Gemäß einer weiteren vorteilhaften Ausführungsform ist die Anzeige beleuchtet. Dies sorgt für eine verbesserte Ablesbarkeit unter schlechten Lichtbedingungen.

Die Steckverbindungseinrichtung ist insbesondere fortgebildet durch einen Kühlkörper, der zur Kühlung des Computerbauteils ausgebildet und eingerichtet ist. Bei diesem Kühlkörper handelt es sich bevorzugt um einen für eine Grafikkarte vorgesehenen Kühlkörper. Dieser kann in Art und Bauweise ähnlich den herkömmlich für Grafikkarten verwendeten Kühlkörpern sein und beispielsweise Kühlrippen, Lüfter oder dergleichen umfassen. Der Kühlkörper erstreckt sich bevorzugt entlang einer großen Flachseite des Computerbauteils, insbesondere der Grafikkarte.

Gemäß einer weiteren vorteilhaften Ausführungsform ist die Steckverbindungseinrichtung dadurch fortgebildet, dass das Basisbauteil, zumindest ein Teil des Adapter-Steckers, zumindest ein Teil der Adapter-Buchse, die elektronische Messvorrichtung und insbesondere die Anzeige in einem gemeinsamen Gehäuse angeordnet sind. Vorteilhaft kann auf diese Weise eine kompaktere Steckverbindungseinrichtung bereitgestellt werden.

Die Steckverbindungseinrichtung ist vor allem für sog. Gaming-PCs äußerst vorteilhaft, da bei solchen Systemen die Grafikkarte vielfach über separate Kabel vom Netzteil intern mit Strom versorgt werden.

Diese Versorgungskabel sind aufwendig zu verlegen und beanspruchen viel Bauraum innerhalb des Gehäuses. Außerdem werden die Stromversorgungskabel fast immer im Zentrum des Blickfelds geführt, vorausgesetzt das Gehäuse des Systems verfügt über eine transparente Seitenwand oder eine Seitenwand, welche zumindest abschnittsweise transparent ist, beispielsweise mit einem Fenster versehen ist. Die Versorgungskabel müssen außerdem oftmals quer über die Grafikkarte verlegt werden, was ebenfalls unerwünschte Nebeneffekte mit sich bringt. Beispielsweise kann eine solche Kabelführung eine effiziente Wärmeabfuhr von der Grafikkarte in den Gehäuseinnenraum behindern. Eine solche Kabelführung wird also in vielen Fällen als nicht optimal empfunden. Die beschriebenen Nachteile können mit Hilfe der Steckverbindungseinrichtung vorteilhaft vermieden werden. Beispielsweise wird der zur Kühlung der Grafikkarte benötigte Luftstrom innerhalb des Gehäuses des Computers nicht mehr unnötig von den Versorgungskabeln behindert.

Mithilfe der Steckverbindungseinrichtung ist es aber auch möglich den Parameter, beispielsweise die Leistungsaufnahme oder auch wahlweise die Stromstärke oder die Spannung, an einem Computerbauteil, wie beispielsweise der Grafikkarte, direkt zu messen und auch darzustellen. Zu diesem Zweck ist beispielsweise ein Mikrocontroller in die Steckverbindungseinrichtung integriert. Dieser wertet den Parameter, also beispielsweise die Spannung und/oder die Stromstärke, direkt in der Steckverbindungseinrichtung aus. Vorteilhaft kann der Einsatz weiterer externer Messgeräte oder dergleichen vermieden werden. Außerdem kann die Leistungsaufnahme des Computerbauteils, beispielsweise der Grafikkarte, direkt abgelesen werden. Über die Schnittstelle der elektrischen Steckverbindungseinrichtung können die erfassten Daten und Parameter außerdem optional über externe Geräte protokolliert aufgezeichnet und ggf. separat dargestellt werden.

Die Aufgabe wird außerdem gelöst durch ein Steckverbindungssystem, welches dadurch fortgebildet ist, dass es zumindest eine erste erfindungsgemäße Steckverbindungseinrichtung und eine zweite erfindungsgemäße Steckverbindungseinrichtung umfasst, wobei die zweite Steckverbindungseinrichtung zusätzlich eine Anzeige umfasst, und wobei die erste und die zweite Steckverbindungseinrichtung jeweils eine drahtgebundene oder drahtlose Schnittstelle umfassen und datentechnisch über diese Schnittstellen miteinander gekoppelt sind, wobei die elektronische Messvorrichtung zumindest der ersten Steckverbindungseinrichtung dazu eingerichtet ist den zumindest einen Parameter an der Schnittstelle bereitzustellen und die elektronische Messvorrichtung der zweiten Steckverbindungseinrichtung dazu eingerichtet ist diesen Parameter über die Schnittstelle auszulesen und auf der Anzeige anzuzeigen.

Vorteilhaft ist es in einem solchen Steckverbindungssystem möglich mehrere Steckverbindungseinrichtungen in einem System gekoppelt zu betreiben. Jede der Steckverbindungseinrichtung umfasst eine elektronische Messvorrichtung, mit der eine elektrische Kenngröße an den jeweiligen internen Verbindungsleitungen gemessen werden kann. Die gemessenen elektrischen Kenngrößen oder auch die zugehörigen Parameter werden über die Schnittstellen ausgetauscht. Die zumindest eine zweite Steckverbindungseinrichtung, welche die Anzeige umfasst, ist dazu eingerichtet einen oder mehrere Parameter auf dieser anzuzeigen. So ist es vorteilhaft möglich an einer zentralen Stelle mehrere Parameter, welche mit den gemessenen elektrischen Kenngrößen korrelieren, anzuzeigen.

Beispielsweise umfasst das Steckverbindungssystem eine Steckverbindungseinrichtung, die dazu eingerichtet ist, in den Verbindungsstecker einer Hauptplatine eines Computers eingesteckt zu werden, so dass die Hauptplatine über diese Steckverbindungseinrichtung mit Strom versorgt wird. Aufgrund des relativ großen Anschlusssteckers fällt eine solche Steckverbindungseinrichtung vergleichsweise aus und es kann ein ebenfalls vergleichsweise große Anzeige in diese integriert werden. Auf einer solchen Anzeige kann beispielsweise neben dem aktuell von der Hauptplatine abgefragten Strom auch der von der Grafikkarte aktuell abgefragte Strom oder auch ein anderer der genannten Parameter angezeigt werden.

Die Aufgabe wird ferner gelöst durch einen Computer mit einem Netzteil und einem Computerbauteil mit einer separaten Stromanschlussbuchse, wobei das Netzteil einen mit einem Stromversorgungskabel verbundenen Stecker bereitstellt, und wobei der Computer dadurch fortgebildet ist, dass der Stecker des Netzteils über eine Steckverbindungseinrichtung nach einem oder mehreren der zuvor genannten Ausführungsformen mit der Stromanschlussbuchse des Computerbauteils verbunden ist.

Auf den Computer treffen gleiche oder ähnliche Vorteile zu, wie sie bereits zuvor im Hinblick auf die Steckverbindungseinrichtung selbst erwähnt wurden.

Gemäß einer vorteilhaften Ausführungsform ist der Computer dadurch fortgebildet, dass das Computerbauteil eine Grafikkarte mit einer separaten Stromanschlussbuchse ist und der Computer ein Gehäuse umfasst, in dem zumindest das Netzteil und die Grafikkarte montiert sind, wobei das Gehäuse auf zumindest einer Seite zumindest abschnittsweise aus einem durchsichtigen Material hergestellt ist und die Grafikkarte und das durchsichtige Material derart in dem Gehäuse angeordnet sind, dass die Grafikkarte zumindest im Bereich ihrer Stromanschlussbuchse durch das durchsichtige Material hindurch von außerhalb des Gehäuses sichtbar ist.

Ein Computer gemäß der zuvor genannten Ausführungsform erlaubt es, während des Betriebs die Leistungsaufnahme der Grafikkarte zu überwachen, was besonders für Systeme mit hoher grafischer Leistungsfähigkeit von Vorteil ist.

Die Aufgabe wird ebenfalls gelöst durch die Verwendung einer Steckverbindungseinrichtung gemäß einer oder mehrerer der zuvor genannten Ausführungsformen zur elektrischen Verbindung einer Grafikkarte eines Computers mit einem Netzteil des Computers.

Auch auf die Verwendung der Steckverbindungseinrichtung treffen gleiche oder ähnliche Vorteile zu, wie sie bereits im Hinblick auf die Steckverbindungseinrichtung und den Computer erwähnt wurden.

Weitere Merkmale der Offenbarung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine elektrische Steckverbindungseinrichtung in vereinfachter perspektivischer Darstellung,
- Fig. 2: diese elektrische Steckverbindungseinrichtung in vereinfachter perspektivischer Darstellung mit Blick auf deren Rückseite,
- Fig. 3: eine vereinfachte perspektivische Darstellung einer elektrischen Steckverbindungseinrichtung mit Blick auf deren Rückseite, wobei deren Gehäuse nicht dargestellt ist,
- Fig. 4: eine vereinfachte Draufsicht auf eine Rückseite der aus Fig. 3 bekannten elektrischen Steckverbindungseinrichtung, betrachtet aus der Richtung IV in Fig. 3,
- Fig. 5: eine vereinfachte Seitenansicht der aus Fig. 3 bekannten elektrischen Steckverbindungseinrichtung, betrachtet aus der Richtung V in Fig. 3,
- Fig. 6: eine schematisch vereinfachte Draufsicht auf eine Vorderseite der aus Fig. 3 bekannten elektrischen Steckverbindungseinrichtung, betrachtet aus der Richtung VI in Fig. 3,
- Fig. 7: eine schematisch vereinfachte Darstellung eines Computers mit einem Netzteil und einem Computerbauteil, welches eine separate Stromanschlussbuchse aufweist, und welches über eine elektrische Steckverbindungseinrichtung mit dem Netzteil verbunden ist.
- Fig. 8: eine schematisch vereinfachte perspektivische Darstellung eines Computers mit einem Computerbauteil, wobei die zur Stromversorgung des Computerbauteils vorgesehene elektrische Steckverbindungseinrichtung einen Kühlkörper für das Computerbauteil umfasst, und
- Fig. 9: eine schematisch vereinfachte Darstellung eines Computers mit einem Netzteil und einem Computerbauteil, welches eine separate Stromanschlussbuchse aufweist, wobei das Computerbauteil und eine Hauptplatine des Computers über ein Steckverbindungssystem mit dem Netzteil verbunden sind.

In den Zeichnungen sind jeweils gleiche oder gleichartige Elemente und/oder Teile mit denselben Bezugsziffern versehen, so dass von einer erneuten Vorstellung jeweils abgesehen wird.

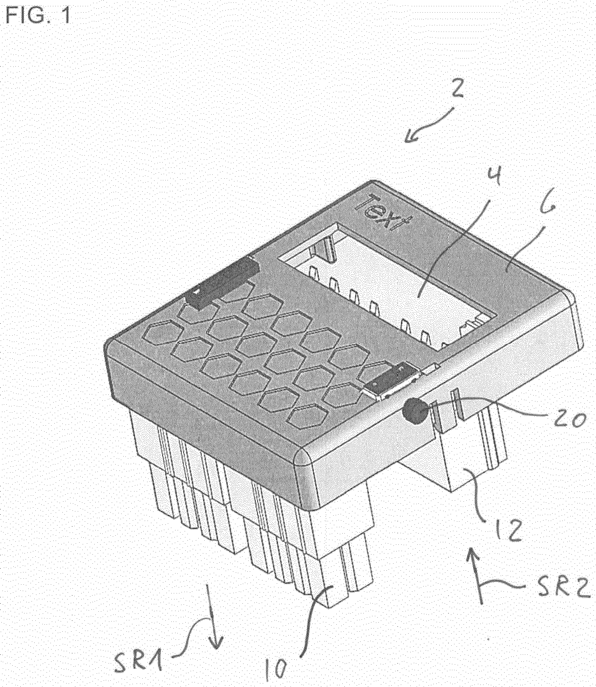

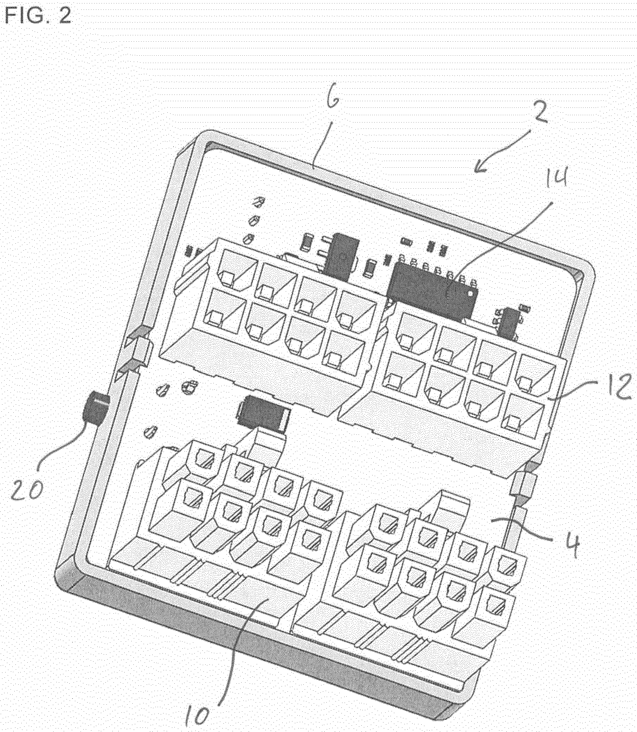

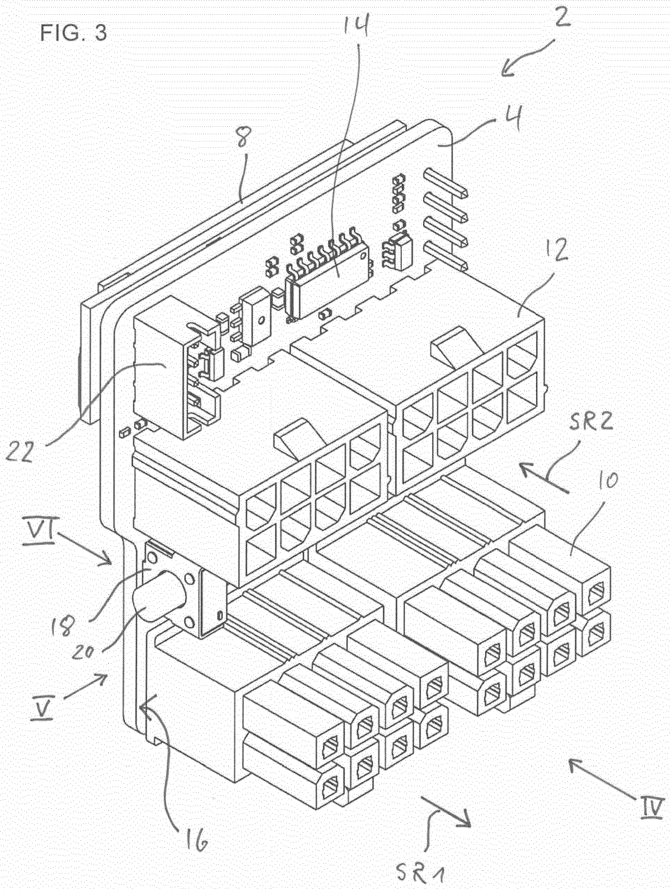

Fig. 1 zeigt in vereinfachter perspektivischer Darstellung eine elektrische Steckverbindungseinrichtung 2 zum Replizieren zumindest einer Stromanschlussbuchse eines Computerbauteils. Bei dem Computerbauteil handelt es sich beispielsweise um eine Grafikkarte. Diese umfasst als Stromanschlussbuchse beispielsweise eine oder mehrere 6-Pin, 8-Pin, 12-Pin oder 24-Pin PCle-Stromanschlussbuchse(n). Die elektrische Steckverbindungseinrichtung 2 umfasst ein Basisbauteil 4 (vgl. Fig. 2 bis 6), bei dem es sich beispielsweise um eine Platine handelt. In der für Fig. 1 gewählten Darstellung ist dieses Basisbauteil 4 größtenteils von einem Gehäuse 6 verdeckt bzw. umfasst. Sichtbar ist das Basisbauteil 4 lediglich im Bereich eines in dem Gehäuse 6 vorhandenen Durchbruchs, in welchem eine Anzeige 8 (vgl. Fig. 3, 5 und 6) angeordnet werden kann. Bei der Anzeige 8 handelt es sich beispielsweise um eine LED-, OLED- oder LCD-Anzeige. Die Anzeige 8 ist ferner beispielsweise beleuchtet, insbesondere hintergrundbeleuchtet. Die elektrische Steckverbindungseinrichtung 2 umfasst einen Adapter-Stecker 10, der in dem in Fig. 1 gezeigten Ausführungsbeispiel lediglich beispielhaft als zweifacher 8-Pin PCle-Stromanschlussstecker ausgeführt ist (vgl. auch Fig. 2). Außerdem umfasst die elektrische Steckverbindungseinrichtung 2 eine Adapter-Buchse 12, welche im dargestellten Ausführungsbeispiel als zweifache 8-Pin PCle-Stromanschlussbuchse ausgeführt ist (vgl. ebenfalls auch Fig. 2). Der Adapter-Stecker 10 ist bauartgemäß ausgestaltet, mit der Stromanschlussbuchse des Computerbauteils eine elektrische Steckverbindung auszubilden. Die Adapter-Buchse 12 ist bauartgemäß ausgestaltet, die Stromanschlussbuchse des Computerbauteils zu replizieren. Im dargestellten Ausführungsbeispiel bedeutet dies, dass der Adapter-Stecker 10 passend ist, um mit einer doppelt ausgeführten 8-Pin PCle-Stromanschlussbuchse eine elektrische Steckverbindung auszubilden und die Adapter-Buchse 12 diese bauteilseitig vorhandene doppelt ausgeführte 8-Pin PCle-Stromanschlussbuchse bauartgemäß repliziert, das heißt wiederum eine zweifache 8-Pin PCle-Stromanschlussbuchse bereitstellt.

Die elektrische Steckverbindungseinrichtung 2 ist derart ausgestaltet, dass der Adapter-Stecker 10 und die Adapter-Buchse 12 mit voneinander abweichenden Steckverbindungsrichtungen an dem Basisbauteil 4 angeordnet sind. Die Steckverbindungsrichtung weist stets ausgehend von dem Stecker in Richtung der Buchse. In Fig. 1 ist eine erste Steckverbindungrichtung SR1, mit der der Adapter-Stecker 10 in die Stromanschlussbuchse des Computerbauteils zum Herstellen einer Steckverbindung eingesteckt wird, dargestellt. Außerdem ist eine zweite Steckverbindungsrichtung SR2 dargestellt, in welcher beispielsweise ein Stecker eines Netzteils in die Adapter-Buchse 12 der elektrischen Steckverbindungseinrichtung 2 eingesteckt wird. Die beiden Steckverbindungsrichtungen SR1, SR2 sind gemäß dem dargestellten Ausführungsbeispiel einander entgegengesetzt.

Es sind weitere, in den Figuren nicht dargestellte, Ausführungsbeispiele vorgesehen, bei denen beispielsweise die Steckverbindungsrichtungen SR1, SR2 um 90° voneinander abweichen. Dies bedeutet, dass bei einer Steckverbindungseinrichtung 2 gemäß einem solchen Ausführungsbeispiel der Adapter-Stecker 10 und die Adapter-Buchse 12 derart an dem Basisbauteil 4 angeordnet sind, dass deren Steckverbindungsrichtungen SR1, SR2 einen Winkel von 90° einschließen. Weichen sie wie in dem in Fig. 1 dargestellten Ausführungsbeispiel um 180° voneinander ab, so sind der Adapter-Stecker 10 und die Adapter-Buchse 12 um 180° gewinkelt an dem Basisbauteil 4 angeordnet.

Der Adapter-Stecker 10 und die Adapter-Buchse 12 sind über nicht dargestellte interne Verbindungsleitungen elektrisch kontaktiert. Die elektrische Steckverbindungseinrichtung 2 umfasst eine elektronische Messvorrichtung 14 (vgl. Fig. 2 bis 4), welche dazu eingerichtet ist, zumindest eine elektrische Kenngröße an den internen Verbindungsleitungen zu messen. Bei der elektronischen Messvorrichtung 14 handelt es sich beispielsweise um einen Mikrocontroller. Die von der elektronischen Messvorrichtung 14 gemessene elektrische Kenngröße ist beispielsweise eine Stromstärke eines zwischen dem Adapter-Stecker 10 und der Adapter-Buchse 12 fließenden Stroms. Alternativ oder zusätzlich kann als elektrische Kenngröße eine Spannung einer zwischen dem Adapter-Stecker 10 und der Adapter-Buchse 12 anliegenden elektrischen Spannung gemessen werden. Es ist ferner vorgesehen, dass die elektronische Messvorrichtung 14 dazu ausgebildet ist, als elektrische Kenngröße eine Leistung des zwischen dem Adapter-Stecker 10 und der Adapter-Buchse 12 fließenden Stroms zu messen, also das Produkt aus Strom und Spannung.

Die elektronische Steckverbindungseinrichtung 2 umfasst ferner die Anzeige 8, und die elektronische Messvorrichtung 14 ist dazu eingerichtet, einen mit der gemessenen elektrischen Kenngröße korrelierten Parameter auf der Anzeige 8 anzuzeigen. Beispielsweise ist vorgesehen, dass die gemessene Spannung oder die gemessene Stromstärke oder auch die daraus berechnete Leistung als Parameter direkt auf der Anzeige 8 angezeigt werden. Es kann beispielsweise aber auch ein beliebig definierter Parameter angezeigt werden. Beispielsweise kann vorgesehen sein, dass eine maximale Leistung in der elektronischen Messvorrichtung 14 voreingestellt oder hinterlegt wird und die aktuell gemessene Leistung als Prozentwert dieser maximalen Leistung dargestellt wird. Die elektronische Messvorrichtung 14 ist beispielsweise dazu eingerichtet die elektrische Kenngröße in Echtzeit oder nahezu Echtzeit zu messen und die Anzeige des mit der elektrischen Kenngröße korrelierten Parameters ebenfalls in Echtzeit oder nahezu Echtzeit vorzunehmen.

Vorteilhaft lässt sich auf diese Weise mithilfe der elektronischen Steckverbindungseinrichtung 2 die dem Computerbauteil, also beispielsweise einer Grafikkarte, zugeführte Leistung direkt an dem Computerbauteil ablesen. Dies versetzt den Benutzer eines Computers, in dem das Computerbauteil verbaut ist, vorteilhaft in die Lage, eine Belastung des Computerbauteils jederzeit abzuschätzen.

Fig. 2 zeigt die elektrische Steckverbindungseinrichtung 2 in einer weiteren vereinfachten perspektivischen Darstellung, in diesem Fall mit Blick auf deren Rückseite. Wie bereits erwähnt, umfasst die elektrische Steckverbindungseinrichtung 2 ein Basisbauteil 4, bei dem es sich beispielsweise um eine Platine handelt. Das Gehäuse 6 ist beispielsweise mittels Rastverbindungen an diesem Basisbauteil 4 befestigt.

Fig. 3 zeigt in einer weiteren vereinfachten perspektivischen Darstellung die elektrische Steckverbindungseinrichtung 2, wobei aus Gründen der Übersichtlichkeit das Gehäuse 6 nicht dargestellt ist. Wie bereits erwähnt, handelt es sich um eine Steckverbindungseinrichtung 2, welche zwei 8-Pin PCle-Stromanschlussstecker als Adapter-Stecker 10 und zwei 8-Pin PCle-Stromanschlussbuchsen als Adapter-Buchsen 12 umfasst. Gemäß weiterer nicht dargestellter Ausführungsbeispiele sind als Adapter-Stecker 10 bzw. Adapter-Buchsen 12 ein oder mehrere 6-Pin PCle-Stromanschlüsse (Buchsen und Stecker) vorgesehen. Es ist ebenso vorgesehen, dass anstatt der zwei dargestellten 8-Pin PCle-Stromanschlüsse (Stecker und Buchsen) lediglich ein einziger 8-Pin-Anschluss vorgesehen ist. Selbstverständlich können gemäß weiterer ebenfalls nicht dargestellter Ausführungsbeispiele mehr als zwei 6-Pin PCle-Stromanschlüsse (Stecker und Buchsen) oder mehr als zwei 8-Pin PCle-Stromanschlüsse (Stecker und Buchsen) realisiert sein. Es ist ferner vorgesehen, dass gemäß weiterer ebenfalls nicht dargestellter Ausführungsbeispiele ein oder mehrere 12-Pin PCle-Stromanschlüsse (Stecker und Buchsen) realisiert sein.

Der Adapter-Stecker 10 und die Adapter-Buchse 12 sind um 180° gewinkelt auf einer gemeinsamen Seite 16 des als Flachteil ausgestalteten Basisbauteils 4, bei dem es sich beispielsweise um eine Platine handelt, angeordnet. Die erste Steckverbindungsrichtung SR1, in der der Adapter-Stecker 10 in die Stromanschlussbuchse des Computerbauteils einsteckbar ist, und die zweite Steckverbindungsrichtung SR2, in der ein weiterer Stecker, beispielsweise ein Stecker eines Netzteils eines Computers, in die Adapter-Buchse 12 einsteckbar ist, sind einander entgegengesetzte Richtungen.

Die elektrische Steckverbindungseinrichtung 2 umfasst ferner einen Schalter 18, dessen Betätigungselement 20 auch in den Fig. 1 und 2 sichtbar ist, und welcher an dem Basisbauteil 4 angeordnet ist. Der Schalter 12 ist so an dem Basisbauteil 4 angeordnet, dass das Betätigungselement 20 aus dem Gehäuse 6 herausragt, sodass der Schalter 12 problemlos betätigt werden kann. Mit diesem Schalter 12 ist die elektronische Messvorrichtung 14 derart ansteuerbar, dass diese auf der Anzeige 8 wahlweise einen oder mehrere der zuvor genannten und erläuterten Parameter anzeigt. Durch einfachen Druck auf das Betätigungselement 20 des Schalters 12 ist es also beispielsweise möglich zwischen der Anzeige einer Spannung, einer Stromstärke oder einer Leistung zu wählen. Es ist mit anderen Worten mit Hilfe des Schalters 18 problemlos möglich, den Anzeigemodus zu wechseln.

Ferner umfasst die Steckverbindungseinrichtung 2 eine drahtgebundene oder drahtlose Schnittstelle, wobei die elektronische Messvorrichtung 14 ferner dazu eingerichtet ist zumindest einen der zuvor genannten und erläuterten Parameter an dieser Schnittstelle bereitzustellen. Beispielhaft umfasst die Steckverbindungseinrichtung 2 gemäß dem dargestellten Ausführungsbeispiel als Schnittstelle eine drahtgebundene Schnittstelle 22, nämlich beispielhaft einen vierpoligen Stecker. Über diese Schnittstelle 22 kann der Parameter an der elektronischen Messvorrichtung 14 ausgelesen werden kann. Über die Schnittstelle 22 ist es auch möglich, die elektronische Messvorrichtung 14 zu programmieren.

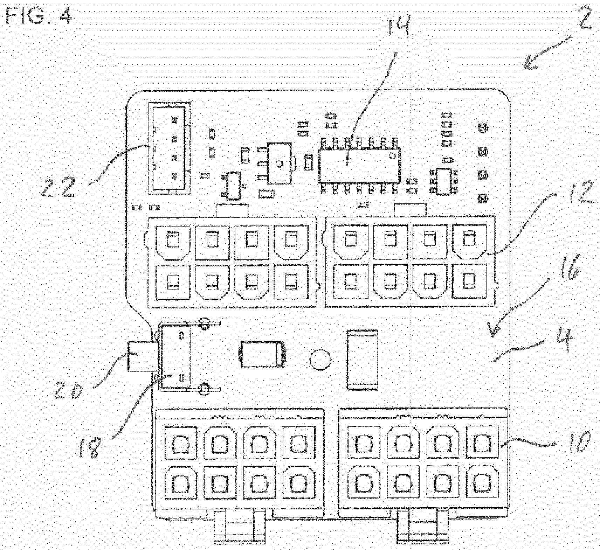

Fig. 4 zeigt die Steckverbindungseinrichtung 2 mit Blick auf deren Rückseite. Die in Fig. 4 dargestellte Blickrichtung ist in Fig. 3 mit IV bezeichnet.

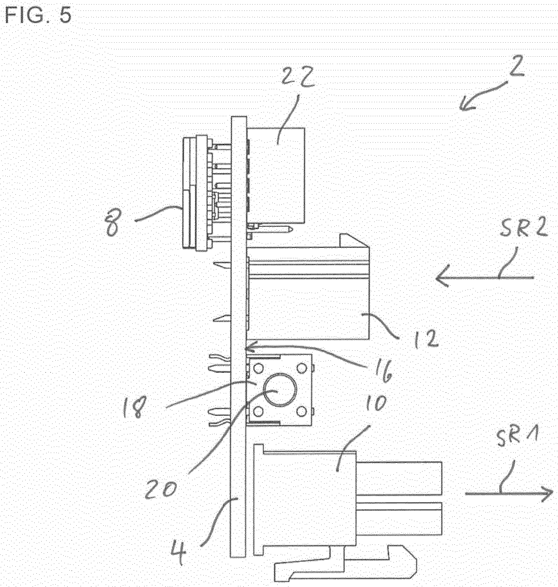

Fig. 5 zeigt eine schematisch vereinfachte Seitenansicht der elektrischen Steckverbindungseinrichtung 2. Die in Fig. 5 dargestellte Blickrichtung ist in Fig. 3 mit V bezeichnet. Deutlich sichtbar sind die auf einer Seite 16 des Basisbauteils 4 angeordnete Adapter-Stecker 10 und Adapter-Buchse 12, deren Steckverbindungsrichtungen SR1, SR2 um 180° gedreht, also einander entgegengerichtet, sind. Auf der gegenüberliegenden Seite des Basisbauteils 4 befindet sich die Anzeige 8.

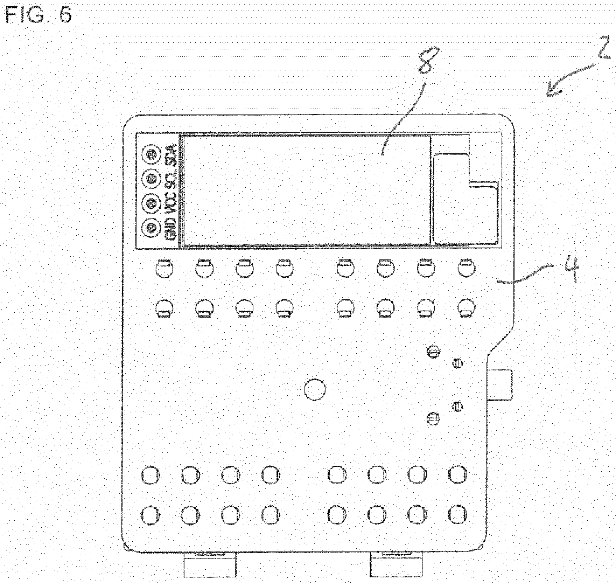

Ein Blick auf diese Seite zeigt Fig. 6. Die dargestellte Blickrichtung ist in Fig. 3 mit VI bezeichnet. Die auf der Vorderseite des Basisbauteils 4 angeordnete Anzeige 8 ist beispielsweise beleuchtet.

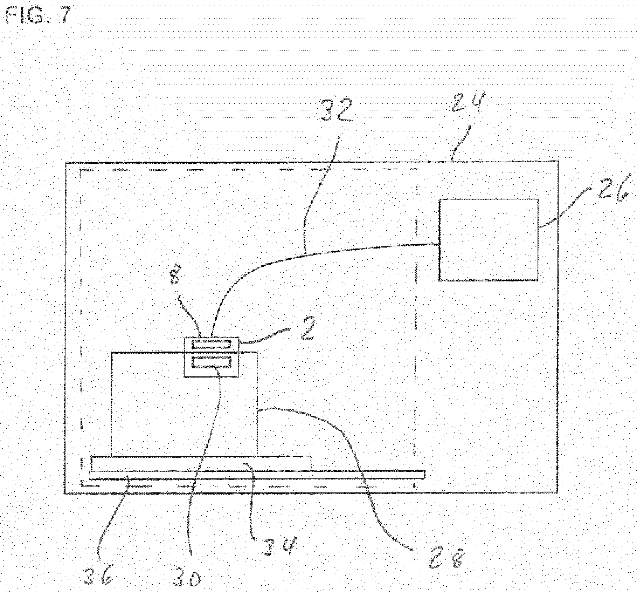

Fig. 7 zeigt in schematisch vereinfachter Darstellung einen Computer 24, der ein Netzteil 26 und ein Computerbauteil 28 mit einer separaten Stromanschlussbuchse 30 umfasst. Bei der Stromanschlussbuchse 30 handelt es sich beispielsweise um eine doppelt ausgeführte 8-Pin PCle-Stromanschlussbuchse. In diese Stromanschlussbuchse 30 kann der Adapter-Stecker 10 der Steckverbindungseinrichtung 2 unter Ausbildung einer Steckverbindung eingesteckt werden. Die Adapter-Buchse 12 repliziert dann genau diese Stromanschlussbuchse 30 des Computerbauteils 28. In die Adapter-Buchse 12 wird ein nicht dargestellter Stecker eines Stromversorgungskabels 32 des Netzteils 26 eingesteckt, sodass das Computerbauteil 28 mit dem Netzteil 26 elektrisch mit Strom versorgt werden kann. Das Computerbauteil 28 ist über einen Steckplatz 34, beispielsweise einen PCI-Slot, mit einer Hauptplatine 36 des Computers 24 datentechnisch verbunden. Weitere von dem Computer 24 umfasste Bauteile sind aus Gründen der Übersichtlichkeit nicht dargestellt.

Bei dem Computerbauteil 28 handelt es sich beispielsweise um eine Grafikkarte, welche einen separaten Stromanschluss in Form der Stromanschlussbuchse 30 umfasst. Ein Gehäuse des Computers 24, in dem neben der Grafikkarte als beispielhaftes Computerbauteil 28 auch das Netzteil 26 und die Hauptplatine 36 angeordnet sind, ist zumindest auf einer Seite zumindest abschnittsweise aus einem durchsichtigen Material hergestellt. Derjenige Bereich, in welchem beispielsweise das transparente Material in der Seitenwand des Gehäuses des Computers 24 vorgesehen ist, oder ein Fenster oder dergleichen vorgesehen ist, ist in Fig. 7 beispielhaft und schematisch vereinfacht mit gestrichelter Linie dargestellt. So ist von außerhalb des Gehäuses ein Blick auf die Steckverbindungseinrichtung 2, insbesondere deren Anzeige 8, möglich. Die beispielsweise von der Grafikkarte abgefragte Leistung kann so von außerhalb des Gehäuses des Computers 24 bequem beobachtet und abgelesen werden.

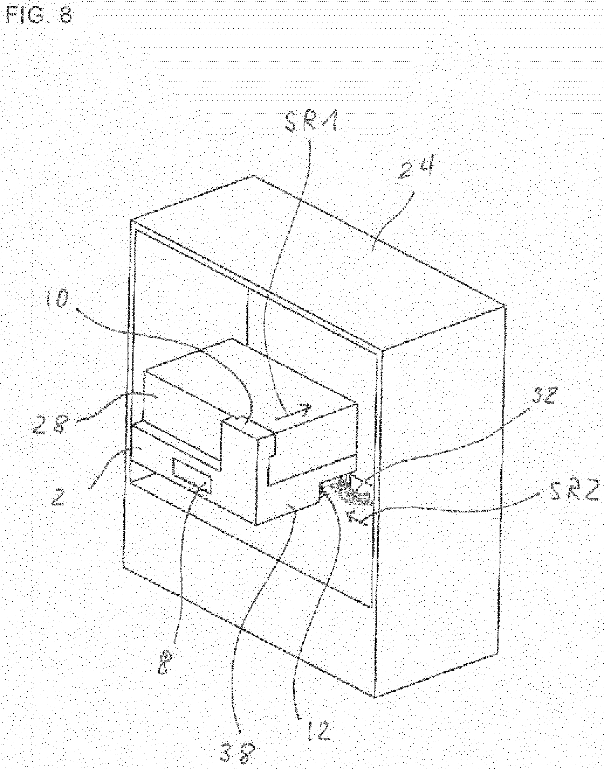

Fig. 8 zeigt in einer schematisch vereinfachten perspektivischen Darstellung einen Computer 24 mit einem Computerbauteil 28, bei dem es sich beispielhaft um eine Grafikkarte handelt. Zur Stromversorgung weist das Computerbauteil 24 eine separate Stromanschlussbuchse auf, auf welche der Adapterstecker 10 der elektrischen Steckverbindungseinrichtung 2 aufgesteckt ist. Die elektrische Steckverbindungseinrichtung 2 umfasst außerdem einen Kühlkörper 38, der zur Kühlung des Computerbauteils 28 ausgebildet und eingerichtet ist. Beispielhaft erstreckt sich dieser Kühlkörper 38 entlang der großen Flachseite des Computerbauteils 28**.**

Der Kühlkörper 38 ist insbesondere als integraler Bestandteil der elektrischen Steckverbindungseinrichtung 2 ausgebildet. Die Steckverbindungsrichtungen SR1, SR2 sind um 90° gewinkelt zueinander angeordnet.

Vorteilhaft können die Stromversorgungskabel 32 in einem näher an der Rückseite des Gehäuses des Computers 24 liegenden Bereich geführt werden, und behindern so die Luftzirkulation innerhalb des Computergehäuses lediglich geringfügig oder gar nicht. In die Steckverbindungseinrichtung 2 ist außerdem eine Anzeige 8 integriert.

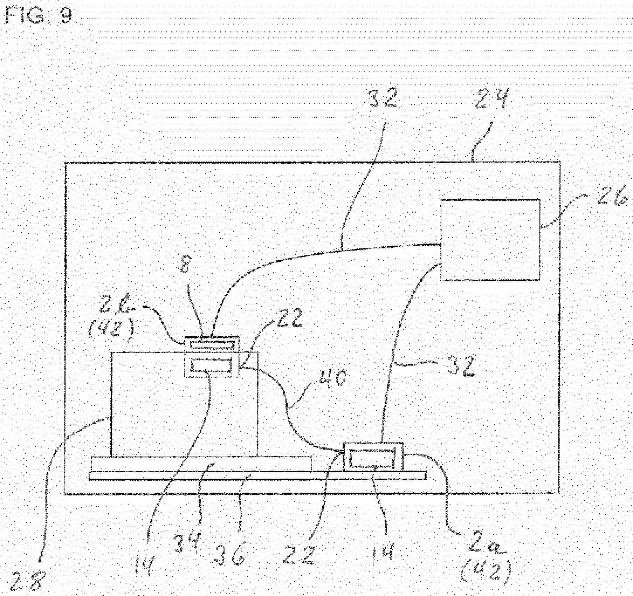

Fig. 9 zeigt in einer schematisch vereinfachten Darstellung einen Computer 24 mit einem Netzteil 26 und einem Computerbauteil 28.

Das Computerbauteil 28 weist eine separate Stromanschlussbuchse auf, in welche eine zweite elektrische Steckverbindungseinrichtung 2b eingesteckt ist, so dass das Computerbauteil 28 über das Stromversorgungskabel 32 mit dem Netzteil 26 elektrisch verbunden werden kann.

Außerdem ist eine Hauptplatine 36 über eine erste elektrische Steckverbindungseinrichtung 2a mit dem Stromversorgungskabel 32 verbunden und kann so elektrisch an das Netzteil 26 angeschlossen werden. Die erste und die zweite elektrische Steckverbindungseinrichtung 2a, 2b bilden gemeinsam ein Steckverbindungssystem 42. Die Steckverbindungseinrichtungen 2a, 2b weisen jeweils eine drahtlose oder drahtgebundene Schnittstelle 22 auf. Beispielhaft handelt es sich bei den Schnittstellen 22 um drahtgebundene Schnittstellen, sodass die beiden elektrischen Steckverbindungseinrichtungen 2a, 2b über ein Datenkabel 40 kommunikationstechnisch miteinander verbunden werden können. Beide Steckverbindungseinrichtung 2a, 2b umfassen jeweils eine elektronische Messvorrichtung 14, mit der wie zuvor beschrieben an den internen Verbindungsleitungen eine elektrische Kenngröße gemessen werden kann. Insbesondere ist die erste elektrische Steckverbindungseinrichtung 2a dazu eingerichtet, diese elektrische Kenngröße oder den damit korrelierten Parameter über das Datenkabel 40 an die zweite elektrische Steckverbindungseinrichtung 2b zu senden. Die elektronische Messvorrichtung 14 dieser zweiten elektrischen Steckverbindungseinrichtung 2b ist dazu eingerichtet, auf der Anzeige 8 diesen über die Schnittstelle 22 empfangenen Parameter, insbesondere gemeinsam mit dem internen gemessenen Parameter, anzuzeigen. Beispielhaft kann auf der Anzeige 8 eine aktuelle Leistung, eine Stromstärke oder eine elektrische Spannung sowohl des Computerbauteils 28 als auch der Hauptplatine 36 angezeigt werden. Die Anzeige 8 kann flexibel in einer der beiden elektrischen Steckverbindungseinrichtungen 2a, 2b platziert sein.

### Bezugszeichenliste

- 2: elektrische Steckverbindungseinrichtung
- 2a: erste elektrische Steckverbindungseinrichtung
- 2b: zweite elektrische Steckverbindungseinrichtung
- 4: Basisbauteil
- 6: Gehäuse
- 8: Anzeige
- 10: Adapter-Stecker
- 12: Adapter-Buchse
- 14: elektronische Messvorrichtung
- 16: Seite
- 18: Schalter
- 20: Betätigungselement
- 22: Schnittstelle
- 24: Computer
- 26: Netzteil
- 28: Computerbauteil
- 30: Stromanschlussbuchse
- 32: Stromversorgungskabel
- 34: Steckplatz
- 36: Hauptplatine
- 38: Kühlkörper
- 40: Datenkabel
- 42: Steckverbindungssystem

- SR1: erste Steckverbindungsrichtung
- SR2: zweite Steckverbindungsrichtung

## Patentansprüche

1. Elektrische Steckverbindungseinrichtung (2) zum Replizieren zumindest einer Stromanschlussbuchse eines Computerbauteils (28), umfassend ein Basisbauteil (4), einen Adapter-Stecker (10) und eine Adapter-Buchse (12), wobei der Adapter-Stecker (10) bauartgemäß ausgestaltet ist, mit der Stromanschlussbuchse des Computerbauteils (28) eine elektrische Steckverbindung auszubilden, und die Adapter-Buchse (12) bauartgemäß ausgestaltet ist, die Stromanschlussbuchse des Computerbauteils (28) zu replizieren, und wobei der Adapter-Stecker (10) und die Adapter-Buchse (12) mit voneinander abweichenden Steckverbindungsrichtungen (SR1, SR2) an dem Basisbauteil (4) angeordnet sind und der Adapter-Stecker (10) und die Adapter-Buchse (12) über interne Verbindungsleitungen elektrisch kontaktiert sind, **gekennzeichnet durch** eine elektronische Messvorrichtung (14), wobei die elektronische Messvorrichtung (14) dazu eingerichtet ist, zumindest eine elektrische Kenngröße an den internen Verbindungsleitungen zu messen.

2. Steckverbindungseinrichtung (2) nach Anspruch 1, **gekennzeichnet durch** eine Anzeige (8), wobei die elektronische Messvorrichtung (14) dazu eingerichtet ist, einen mit dem Wert der Kenngröße korrelierten Parameter auf der Anzeige (8) anzuzeigen.

3. Steckverbindungseinrichtung (2) nach Anspruch 1 oder 2, **dadurch gekennzeichnet, dass** der Adapter-Stecker (10) und die Adapter-Buchse (12) um 90° oder um 180° gewinkelt an dem Basisbauteil (4) angeordnet sind.

4. Steckverbindungseinrichtung (2) nach Anspruch 3, **dadurch gekennzeichnet, dass** der Adapter-Stecker (10) und die Adapter-Buchse (12) um 180° gewinkelt auf einer gemeinsamen Seite (16) des als Flachteil ausgestalteten Basisbauteils (4) angeordnet sind, sodass eine erste Steckverbindungsrichtung (SR1), in der der Adapter-Stecker (10) in die Stromanschlussbuchse des Computerbauteils (28) einsteckbar ist, und eine zweite Steckverbindungsrichtung (SR2), in der ein weiterer Stecker in die Adapter-Buchse (12) einsteckbar ist, einander entgegengesetzte Richtungen sind.

5. Steckverbindungseinrichtung (2) nach einem der Ansprüche 1 bis 4, **dadurch gekennzeichnet, dass** der Adapter-Stecker (10) zumindest einen 6-Pin, 8-Pin, 12-Pin und/oder 24-Pin Stecker passend für eine entsprechende PCle-Stromanschlussbuchse umfasst und die Adapter-Buchse (12) zumindest eine 6-Pin, 8-Pin, 12-Pin und/oder 24-Pin PCle-Stromanschlussbuchse umfasst.

6. Steckverbindungseinrichtung (2) nach einem der Ansprüche 1 bis 5, **dadurch gekennzeichnet, dass** die elektronische Messvorrichtung (14) dazu eingerichtet ist, als elektrische Kenngröße eine Stromstärke eines zwischen dem Adapter-Stecker (10) und der Adapter-Buchse (12) fließenden Stroms und/oder eine Spannung einer zwischen dem Adapter-Stecker (10) und der Adapter-Buchse (12) anliegenden elektrischen Spannung zu messen.

7. Steckverbindungseinrichtung (2) nach Anspruch 6 in Verbindung mit Anspruch 2, **dadurch gekennzeichnet, dass** die elektronische Messvorrichtung (14) ferner dazu eingerichtet ist als Parameter einen Wert des gemessenen Stroms und/oder einen Wert der gemessenen Spannung anzuzeigen und/oder einen Wert der zwischen dem Adapter-Stecker (10) und der Adapter-Buchse (12) übertragenen elektrischen Leistung als Parameter anzuzeigen.

8. Steckverbindungseinrichtung (2) nach Anspruch 6 oder 7, **gekennzeichnet durch** einen Schalter (18), welcher an dem Basisbauteil (4) angeordnet ist und mit welchem die elektronische Messvorrichtung (14) derart ansteuerbar ist, dass diese auf der Anzeige (8) wahlweise einen oder mehrere der Parameter anzeigt.

9. Steckverbindungseinrichtung (2) nach einem der Ansprüche 1 bis 8, **gekennzeichnet durch** eine drahtgebundene oder drahtlose Schnittstelle, wobei die elektronische Messvorrichtung (14) dazu eingerichtet ist, zumindest einen Parameter an der Schnittstelle (22) bereitzustellen.

10. Steckverbindungseinrichtung (2) nach einem der Ansprüche 1 bis 9, **gekennzeichnet durch** einen Kühlkörper (38), der zur Kühlung des Computerbauteils (28) ausgebildet und eingerichtet ist.

11. Steckverbindungseinrichtung (2) nach einem der Ansprüche 1 bis 10, **dadurch gekennzeichnet, dass** das Basisbauteil (4), zumindest ein Teil des Adapter-Steckers (10), zumindest ein Teil der Adapter-Buchse (12), die elektronische Messvorrichtung (14) und insbesondere die Anzeige (8) in einem gemeinsamen Gehäuse (6) angeordnet sind.

12. Steckverbindungssystem (42), **gekennzeichnet durch** zumindest eine erste Steckverbindungseinrichtung (2a) nach Anspruch 1 und eine zweite Steckverbindungseinrichtung (2b) nach Anspruch 2, wobei die erste und die zweite Steckverbindungseinrichtung (2a, 2b) jeweils eine drahtgebundene oder drahtlose Schnittstelle (22) umfassen und datentechnisch über diese Schnittstellen (22) miteinander gekoppelt sind, wobei die elektronische Messvorrichtung (14) zumindest der ersten Steckverbindungseinrichtung (2a) dazu eingerichtet ist den zumindest einen Parameter an der Schnittstelle (22) bereitzustellen und die elektronische Messvorrichtung (14) der zweiten Steckverbindungseinrichtung (2b) dazu eingerichtet ist, diesen Parameter an der Schnittstelle (22) auszulesen und auf der Anzeige (8) anzuzeigen.

13. Computer (24) mit einem Netzteil (26) und einem Computerbauteil (28) mit einer separaten Stromanschlussbuchse (30), wobei das Netzteil (26) einen mit einem Stromversorgungskabel (32) verbundenen Stecker bereitstellt, **dadurch gekennzeichnet, dass** der Stecker des Netzteils (26) über eine Steckverbindungseinrichtung (2) nach einem der Ansprüche 1 bis 11 mit der Stromanschlussbuchse (30) des Computerbauteils (28) verbunden ist.

14. Computer (24) nach Anspruch 13, **dadurch gekennzeichnet, dass** das Computerbauteil (28) eine Grafikkarte mit einer separaten Stromanschlussbuchse (30) ist und der Computer (24) ein Gehäuse umfasst, in dem zumindest das Netzteil (26) und die Grafikkarte montiert sind, wobei das Gehäuse auf zumindest einer Seite zumindest abschnittsweise aus einem durchsichtigen Material hergestellt ist und die Grafikkarte und das durchsichtige Material derart in dem Gehäuse angeordnet sind, dass die Grafikkarte zumindest im Bereich ihrer Stromanschlussbuchse (30) durch das durchsichtige Material hindurch von außerhalb des Gehäuses sichtbar ist.

15. Verwendung einer Steckverbindungseinrichtung (2) nach einem der Ansprüche 1 bis 11 zur elektrischen Verbindung eines Computerbauteils (28), insbesondere einer Grafikkarte, eines Computers (24) mit einem Netzteil (26) des Computers (24).

## Claims

1. An electrical plug-in connection device (2) for replicating at least one power supply socket of a computer component (28), comprising a base component (4), an adapter plug (10) and an adapter socket (12), wherein the adapter plug (10) is configured in accordance with the design to form an electrical plug-in connection with the power supply socket of the computer component (28), and the adapter socket (12) is configured in accordance with the design to replicate the power supply socket of the computer component (28), and wherein the adapter plug (10) and the adapter socket (12) are arranged on the base component (4) with plug-in connection directions (SR1, SR2) which deviate from one another, and the adapter plug (10) and the adapter socket (12) are electrically contacted via internal connecting wires, **characterized by** an electronic measuring device (14), wherein the electronic measuring device (14) is adapted to measure at least one electrical characteristic on the internal connecting wires.

2. The plug-in connection device (2) according to Claim 1, **characterized by** a display (8), wherein the electronic measuring device (14) is adapted to display a parameter correlated with the value of the characteristic on the display (8).

3. The plug-in connection device (2) according to Claim 1 or 2, **characterized in that** the adapter plug (10) and the adapter socket (12) are arranged at an angle of 90° or 180° on the base component (4).

4. The plug-in connection device (2) according to Claim 3, **characterized in that** the adapter plug (10) and the adapter socket (12) are arranged at an angle of 180° on a common side (16) of the base component (4) configured as a flat part, so that a first plug-in connection direction (SR1), in which the adapter plug (10) can be plugged into the power supply socket of the computer component (28), and a second plug-in connection direction (SR2), in which a further plug can be plugged into the adapter socket (12), are directions which are opposite one another.

5. The plug-in connection device (2) according to any one of Claims 1 to 4, **characterized in that** the adapter plug (10) comprises at least one 6-pin, 8-pin, 12-pin and/or 24-pin plug suitable for a corresponding PCIe power supply socket and the adapter socket (12) comprises at least one 6-pin, 8-pin, 12-pin and/or 24-pin PCIe power supply socket.

6. The plug-in connection device (2) according to any one of Claims 1 to 5, **characterized in that** the electronic measuring device (14) is adapted to measure a current intensity of a current flowing between the adapter plug (10) and the adapter socket (12) and/or a voltage of an electrical voltage present between the adapter plug (10) and the adapter socket (12) as an electrical characteristic.

7. The plug-in connection device (2) according to Claim 6 in conjunction with Claim 2, **characterized in that** the electronic measuring device (14) is further adapted to display a value of the measured current and/or a value of the measured voltage as a parameter and/or to display a value of the electrical power transmitted between the adapter plug (10) and the adapter socket (12) as a parameter.

8. The plug-in connection device (2) according to Claim 6 or 7, **characterized by** a switch (18) which is arranged on the base component (4) and with which the electronic measuring device (14) can be controlled in such a way that it optionally displays one or more of the parameters on the display (8).

9. The plug-in connection device (2) according to any one of Claims 1 to 8, **characterized by** a wired or wireless interface, wherein the electronic measuring device (14) is adapted to provide at least one parameter at the interface (22).

10. The plug-in connection device (2) according to any one of Claims 1 to 9, **characterized by** a heat sink (38) which is formed and adapted to cool the computer component (28).

11. The plug-in connection device (2) according to any one of Claims 1 to 10, **characterized in that** the base component (4), at least a part of the adapter plug (10), at least a part of the adapter socket (12), the electronic measuring device (14) and in particular the display (8) are arranged in a common housing (6).

12. A plug-in connection system (42), **characterized by** at least one first plug-in connection device (2a) according to Claim 1 and a second plug-in connection device (2b) according to Claim 2, wherein the first and the second plug-in connection device (2a, 2b) each comprise a wired or wireless interface (22) are coupled to one another using data technology via said interfaces (22), wherein the electronic measuring device (14) of at least the first plug-in connection device (2a) is adapted to provide the at least one parameter at the interface (22) and the electronic measuring device (14) of the second plug-in connection device (2b) is adapted to read out said parameter at the interface (22) and display it on the display (8).

13. A computer (24) having a power supply (26) and a computer component (28) having a separate power supply socket (30), wherein the power supply (26) provides a plug connected with a power supply cable (32), **characterized in that** the plug of the power supply (26) is connected via a plug-in connection device (2) according to any one of Claims 1 to 11 to the power supply socket (30) of the computer component (28).

14. The computer (24) according to Claim 13, **characterized in that** the computer component (28) is a graphics card having a separate power supply socket (30) and the computer (24) comprises a housing, in which at least the power supply (26) and the graphics card are mounted, wherein the housing is produced at least in sections from a transparent material on at least one side and the graphics card and the transparent material are arranged in the housing in such a way that the graphics card is visible through the transparent material from outside the housing at least in the region of its power supply socket (30).

15. Use of a plug-in connection device (2) according to any one of Claims 1 to 11 for electrically connecting a computer component (28), in particular a graphics card, of a computer (24) to a power supply (26) of the computer (24).

## Revendications

1. Dispositif (2) de connexion électrique par enfichage, destiné à répliquer au moins une prise de raccordement électrique d'un composant d'ordinateur (28), comprenant un composant de base (4), une fiche adaptatrice (10) et une prise adaptatrice (12), la fiche adaptatrice (10) étant conçue de manière à former une connexion électrique avec la prise de courant du composant d'ordinateur (28), et la prise adaptatrice (12) étant conçue pour répliquer la prise de raccordement du composant d'ordinateur (28), et la fiche adaptatrice (10) et la prise adaptatrice (12) étant agencées sur le composant de base (4) avec des directions d'enfichage pour connexion (SR1, SR2) différentes l'une de l'autre, et la fiche adaptatrice (10) et la prise adaptatrice (12) étant reliées électriquement par des lignes de connexion internes, **caractérisé par** un dispositif de mesure électronique (14), le dispositif de mesure électronique (14) étant conçu pour mesurer au moins une grandeur électrique caractéristique sur les lignes de connexion internes.

2. Dispositif (2) de connexion par enfichage selon la revendication 1, **caractérisé par** un afficheur (8), le dispositif de mesure électronique (14) étant conçu pour afficher sur l'afficheur (8) un paramètre corrélé à la valeur de la grandeur caractéristique.

3. Dispositif (2) de connexion par enfichage selon la revendication 1 ou la revendication 2, **caractérisé en ce que** la fiche adaptatrice (10) et la prise adaptatrice (12) sont agencées selon un angle de 90° ou de 180° sur l'élément de base (4).

4. Dispositif (2) de connexion par enfichage selon la revendication 3, **caractérisé en ce que** la fiche adaptatrice (10) et la prise adaptatrice (12) sont agencées selon un angle de 180° sur un côté commun (16) de l'élément de base (4) conçu sous forme de partie plate, de sorte qu'il existe une première directions d'enfichage pour connexion (SR1), dans laquelle la fiche adaptatrice (10) est enfichable dans la prise adaptatrice du composant d'ordinateur (28), et une deuxième directions d'enfichage pour connexion (SR2), dans laquelle une autre fiche est enfichable dans la prise adaptatrice (12), qui sont opposées l'une à l'autre.

5. Dispositif (2) de connexion par enfichage selon l'une des revendications 1 à 4, **caractérisé en ce que** la fiche adaptatrice (10) comprend au moins une fiche à 6 broches, 8 broches, 12 broches et/ou 24 broches adaptée à une prise d'alimentation PCle correspondante, et la prise adaptatrice (12) comprend au moins une prise d'alimentation à 6 broches, 8 broches, 12 broches et/ou 24 broches adaptée à une prise d'alimentation PCle correspondante.

6. Dispositif (2) de connexion par enfichage selon l'une des revendications 1 à 5, **caractérisé en ce que** le dispositif de mesure électronique (14) est conçu pour mesurer, en tant que grandeur électrique caractéristique, une intensité de courant circulant entre la fiche adaptatrice (10) et la prise adaptatrice (12) et/ou une tension électrique présente entre la fiche adaptatrice (10) et la prise adaptatrice (12).

7. Dispositif (2) de connexion par enfichage selon la revendication 6 en tant qu'elle est rattachée à la revendication 2, **caractérisé en ce que** le dispositif de mesure électronique (14) est en outre conçu pour afficher sous forme de paramètre une valeur du courant mesuré et/ou une valeur de la tension mesurée et/ou pour afficher sous forme de paramètre une valeur de la puissance électrique transmise entre la fiche adaptatrice (10) et la prise adaptatrice (12).

8. Dispositif (2) de connexion par enfichage selon la revendication 6 ou la revendication 7, **caractérisé par** un commutateur (18) agencé sur le composant de base (4) et au moyen duquel le dispositif de mesure électronique (14) est apte à être commandé de manière que celui-ci affiche sélectivement un ou plusieurs des paramètres sur l'afficheur (8).

9. Dispositif (2) de connexion par enfichage selon l'une des revendications 1 à 8, **caractérisé par** une interface filaire ou sans fil, le dispositif de mesure électronique (14) étant conçu pour fournir au moins un paramètre à l'interface (22).

10. Dispositif (2) de connexion par enfichage selon l'une des revendications 1 à 9, **caractérisé par** un dissipateur thermique (38) qui est conçu et agencé pour refroidir le composant d'ordinateur (28).

11. Dispositif (2) de connexion par enfichage selon l'une des revendications 1 à 10, **caractérisé en ce que** le composant de base (4), au moins une partie de la fiche adaptatrice (10), au moins une partie de la prise adaptatrice (12), le dispositif de mesure électronique (14), et en particulier l'afficheur (8), sont agencés dans un boîtier commun (6).

12. Système (42) de connexion par enfichage, **caractérisé par** au moins un premier dispositif (2a) de connexion par enfichage selon la revendication 1 et un deuxième dispositif (2b) de connexion par enfichage selon la revendication 2, les premier et deuxième dispositifs (2a, 2b) de connexion par enfichages comprenant chacun une interface filaire ou sans fil (22) et étant reliés entre eux par ces interfaces (22) pour une transmission de données, le dispositif de mesure électronique (14) au moins du premier dispositif (2a) de connexion par enfichage étant conçu pour fournir ledit au moins un paramètre à l'interface (22) et le dispositif de mesure électronique (14) du deuxième dispositif (2b) de connexion par enfichage étant conçu pour lire ce paramètre sur l'interface (22) et l'afficher sur l'afficheur (8).

13. Ordinateur (24) comprenant un bloc d'alimentation (26) et un composant d'ordinateur (28) doté d'une prise séparée (30) d'alimentation électrique, le bloc d'alimentation (26) étant muni d'une fiche reliée à un câble d'alimentation électrique (32), **caractérisé en ce que** la fiche du bloc d'alimentation (26) est reliée à la prise de courant (30) du composant d'ordinateur (28) via un dispositif (2) de connexion par enfichage selon l'une des revendications 1 à 11.

14. Ordinateur (24) selon la revendication 13, **caractérisé en ce que** le composant d'ordinateur (28) est une carte graphique dotée d'une prise séparée (30) d'alimentation électrique, et **en ce que** l'ordinateur (24) comprend un boîtier dans lequel sont montés au moins le bloc d'alimentation (26) et la carte graphique, le boîtier étant réalisé au moins partiellement, sur au moins un côté, en un matériau transparent, et la carte graphique et le matériau transparent étant agencés dans le boîtier de telle sorte que la carte graphique soit visible depuis l'extérieur du boîtier à travers le matériau transparent au moins dans la zone de sa prise de connexion électrique (30).

15. Utilisation d'un dispositif (2) de connexion par enfichage selon l'une des revendications 1 à 11 pour la connexion électrique d'un composant d'ordinateur (28), en particulier d'une carte graphique, d'un ordinateur (24) à un bloc d'alimentation (26) de l'ordinateur (24).
